# EUROPEAN PATENT APPLICATION

(11) **EP 4 610 955 A1**
(43) Date of publication of application: **03.09.2025**
(21) Application number: 25160572.1
(22) Date of filing: 27.02.2025
(51) Int. Cl.: G07F 11/02, G07F 11/06, G07F 11/16, G07F 9/10, G07F 17/00

(54) **A HOT FOOD VENDING MACHINE**

(30) Priority: 27.02.2024 GB 202402738
(71) Applicant: Samworth Brothers Ltd, Leicestershire LE13 1GA (GB)
(72) Inventor: Shea-Simmonds, Duncan, Leicester LE1 5TT (GB); Brindza-Bodnar, Adam, Leicester LE1 5TT (GB); Walter, William, Leicester LE1 5TT (GB)
(74) Representative: Serjeants LLP

(57) **Abstract**

A hot food vending machine (1) is provided. The vending machine (1) comprises a food compartment (2) for containing packages (5) of a heatable food. The food compartment (2) has one or more storage locations (4) in which a package (5) can be located and an openable closure (16) that seals the compartment (2) when in a closed position. The food compartment (2) may be refrigerated to prolong the life of the packages (5). The vending machine (1) also comprises a non-microwave heating area (20) for heating the packages (5) separate from the food compartment (2). The heating area (20) is utilized to heat food moved from the food compartment (2) prior to the heated food being dispensed to a user. The vending machine additionally comprises moving apparatus (10, 12, 23) for moving a package (5) from the food compartment (2) to the heating area (20) through the openable closure (15). **In** embodiments the moving apparatus (10, 12, 23) may be formed such that each only moved along a single axis of movement.

## Description

### Field of Invention

The present invention relates to the vending of foods from standalone machines.

### Background to the Invention

Vending machines are common around the world and very well known. A wide variety of items can be obtained from vending machines, including consumables, food, drink, and many other items. Generally, food obtained from vending machines is ready to eat food that can be stored for long periods of times at ambient temperatures. Vending machines are particularly commonly used for confectionery, and long-life snacks such as packets of crisps/chips. Hot drinks, such as coffee, can also be obtained from vending machines and these machines are commonplace.

There is a desire to provide vending machines for perishable and hot foods, particularly foods that might be purchased alongside hot drinks, for example toasted sandwiches. Currently there is no reliable vending machine for providing such foods. Some attempts have been made to provide vending machines for hot foods but they have all been deficient or highly specialised. Typically, the operation of a vending machine for hot food will involve moving a selected food item from a storage compartment to a microwave compartment in which the food is heated via microwaves. After heating to a suitable temperature the food is dispensed to the consumer. This is appropriate for foods that can be heated appropriately by microwave. However, numerous foods are significantly reduced in quality if heated by microwave. For example, toasted sandwiches become damp and soft when heated by microwave. In order to retain quality it is necessary to heat them in a manner analogous to toasting.

In light of the above there is a need for an improved hot food vending machine that is capable of providing suitably heated food items.

### Summary of the Invention

The present invention provides a hot food vending machine comprising:
a food compartment for containing packages of a heatable food, the food compartment having one or more storage locations in which a package can be located and an openable closure that seals the compartment when in a closed position;
a non-microwave heating area for heating the packages separate from the food compartment; and
moving apparatus for moving a package from the food compartment to the heating area through the openable closure; wherein:
   one or more shelves are located in the food compartment on which the packages can be positioned, each shelf extending from a rear end to a front edge;
   a vertical movable dispensing platform is provided forward of the front edge of the or each shelf within the food compartment, the dispensing platform being vertically movable to be positioned adjacent a front edge of a shelf and sized to hold a food package and having a rear edge for positioning adjacent a front edge of a shelf and a front edge opposing the rear edge; and
   the dispensing platform can be moved vertically through the openable closure of the food compartment.

The machine of the present provides a vending machine with a food compartment in which food packages can be stored. When a user selects a suitable food package the moving apparatus will select an appropriate food package from the food compartment to the non-microwave heating compartment. The food package will then be heated for an appropriate time period until it reaches an appropriate temperature. After heating the food package will then be provided to the user for consumption.

The vending machine of the present invention may comprise any suitable controller for controlling the operation of the machine. A controller may be entirely integrated within the vending machine and/or the vending machine may communicate with an external controller, for example a server or data centre or mobile app.

The vending machine of the present invention may also comprise payment collection means for collecting payment from a user. Any suitable payment collection means may be utilised, including but not limited to a contactless card reader, a coin or note collection reader, smart phone payment, or a physical card reader.

The hot vending machine may be utilised for any food package that can be stored in a food compartment, as discussed below, and that requires heating before consumption. The vending machine is particularly suitable for use with toasted sandwiches, toasted paninis, and other similar filled items that are typically toasted before consumption. As discussed below, the heating compartment of the present invention may be specifically designed and intended for use with such food packages.

The heating compartment of the present invention is a non-microwave heating compartment. That is, it provides at least one source of heating for a food package that is not a microwave. The source of heating may be a conduction heating source, a convention heating source, or any other suitable source of heating. The heating compartment may include a microwave heating source in addition to another heating source but will not include a microwave heat source as the sole heat source.

The food package of the present invention may comprise any suitable food item that can be stored for a period of time before being heated and then immediately consumed. The food package may comprise a standalone food item that requires no external packaging but is preferably heated before eating, for example a pie, a pasty or a similar item. Alternatively, the food package may comprise an item and the packaging in which it is stored. In such embodiments it is to be understood that the food item would be heated in said packaging. In some embodiments the vending machine may comprise a mechanism for removing or opening the packaging of a food item. In other embodiments of the invention the vending machine may provide the heated food package to a user in the packaging in which the food item it is packaged. The user may then open the packaging to access the food item.

If the packaging of the food package is intended to be heated then any packaging should be formed so that it is able to be heated without becoming damaged and without degrading the food within the packaging. For example, the packaging may be formed of greaseproof paper or a similar material that can be heated without significantly degrading. Labels and/or printing may be positioned on the packaging so long as they aren't significantly degraded by heating. In order to avoid degradation labels, printing, and seals of the packaging may be positioned on a food package in a position away from portions of the food package that are intended to be in direct contact with heating elements, such as the heating plates discussed below. One example of a suitable material is food grade heat sealable PET (Polyethylene Terephthalate) film, optionally with an ovenable print provided thereon.

The food compartment of the vending machine is intended to hygienically store the food packages for short to medium periods of time. The food compartment may be formed in any manner that achieves this. This includes, but is not limited to, the food compartment comprising refrigeration means, one or more fans for air circulation, and seals to prevent air or liquid ingress. In embodiments of the invention the food compartment may be refrigerated and be operated to either freeze the food packages or chill the food packages to extend their shelf life.

The food compartment may comprise one or more windows to allow a user to see food packages located therein. Any such windows may be provided at a front side of the food compartment. Alternatively, the food compartment may have no windows such that the food packages can only be seen directly if and when it is opened by an operator.

A digital screen may be provided for providing information on the vending machine. Such information may include, but is not limited to, the type of food package in the food compartment and/or the number of food packages in the food compartment and/or the price of the food packages in the food compartment and/or instructions.

It may be advantageous that the food compartment is unable to be directly accessed by a user without operating the vending machine but is able to be accessed by an operator in order to restock the food compartment with food packages. For example, the food compartment may have a lockable door that can be opened to access the interior of the food compartment.

The food packages are positioned on the upper surface of the one or more shelves in the food compartment.

The vending machine of the present invention comprises one or more shelves located in the food compartment on which the packages can be positioned each shelf extending from a rear end to a front edge. The rear end of a shelf may be positioned substantially at an internal back wall of the food compartment. A food compartment may have any suitable number of shelves. The size and spacing of any shelves may be determined by the size and shape of the food packages to be positioned thereon. A food compartment may have one, two, three, four, five, six, seven, eight, nine, ten, eleven or twelve shelves or any other number suitable for storing the food packages. Shelves may comprise dividers that separate rows of products from one another, such that each row can be pushed forward independently of one another. Separate shelves may be provided at the same level. For example, there may be two, three, or four, or more columns of shelves.

In order to allow food packages to be dispensed from the vending machines it is necessary to move food packages along an upper surface of any shelves provided in the food compartment. In order to facilitate this the shelves may be formed or provided with a low friction upper surface. A low friction surface is a surface along which a food package can slide with little effort. Examples of low friction surfaces include, but are not limited to, surfaces formed from polytetrafluoroethylene (PTFE), nylon, acetal, rollers and bearings. Any such surface may be integral with a shelf or provided as a mat or covering positioned on a shelf. A shelf of the present invention may comprise one or more rollers to facilitate the movement of a food package along or off the shelf. Rollers may be provided along an upper surface of the shelf and/or rollers may be provided at a front or rear edge of the shelf to allow a food package to be pushed, or otherwise moved, off the shelf.

A pusher may be provided for each of the shelves, wherein the pusher is arranged to be able to be controlled to push a package located on a shelf towards the front edge or rear edge of the shelf. A pusher may be formed and controlled in any manner apparent to the person skilled in the art. Advantageously, a pusher may be formed such that it is only required to operate along a single axis of movement, along an axis parallel to an upper surface of a shelf between the front end and the rear end, and do not require any additional movement. This is advantageous as it allows the construction and control of the pushers to be simple, thereby minimisng the likelihood of issues with the operation of the vending machine. As will be readily understood, a pusher may be controlled to push an individual food package off a shelf when controlled to do so. The or each pusher may comprise a horizontally movable actuator that can be moved along a shelf between the rear end and the front edge.

The vending machine further comprises one or more vertically movable dispensing platforms provided forward of a front edge of the or each shelf within the food compartment; the dispensing platform being vertically movable to be positioned adjacent a front edge of a shelf and sized to hold a food package and having a rear edge for positioning adjacent a front edge of a shelf and a front edge opposing the rear edge. A vertically movable dispensing platform may be operated to move a food package vertically from the front edge of a shelf directly or indirectly to the heating area. If a heating area is located directly vertically above or below a shelf located in the food compartment then a vertically movable dispensing platform may act to move the food package directly from a shelf to the heating area. If the heating area is located laterally away from a shelf further movement of the food package may be required. Generally, a vertically movable dispensing platform of a vending machine according to the present invention will be capable only of movement along a vertical axis, relative to the normal orientation of the vending machine, this is preferable as it provides simple construction and control of the dispensing platform, thereby minimising the likelihood of issues with the operation of the vending machine. A vertically movable dispensing platform may be formed and controlled in any manner apparent to the person skilled in the art. In use, the dispensing platform will be controlled to move vertically such that it is positioned adjacent a front edge of a shelf, a food package will then be moved from the shelf onto the dispensing platform, the dispensing platform will then be controlled to move vertically to a subsequent position, either in the heating area or adjacent a further apparatus for moving the food package into the heating area, as discussed below. The dispensing platform may be sized and shaped to substantially conform to the food packages that are dispensed from the vending machine. For example, if the food packages are uniformly sized and shaped the dispensing platform may be sized and shaped accordingly.

If there are a plurality of shelves provided at one level and/or there are dividers provided on one or more shelves with a divider then a plurality of vertical movable dispensing platforms may be provided, one for each row on the shelves or one for each of the plurality of shelves. All of the following description is to be understood on this basis.

In order to help retain a food package item on a dispensing platform it may be advantageous that the dispensing platform has one or more barrier members at a front edge to prevent packages falling off said front edge. A barrier member may be formed in any manner apparent to a person skilled in the art and may, for example, comprise one or more barrier posts and/or a raised lip extending partially or completely across a width of the dispensing platform. Barrier members are advantageous as they prevent food packages being moved too far forward off a shelf when moved onto the dispensing platform.

In order to move from a shelf to a dispensing platform it may be necessary to push a food package off an edge of a platform over a rear edge of the dispensing platform, for example this may be done by a pusher operating to push the food packages along a shelf, as described above.

In order to facilitate moving a food package from a shelf to the dispensing platform one or more rollers may be provided a at a rear edge of the dispensing platform.

In order to help ensure that a food package moving from a shelf to the dispensing platform does not get stuck part-way on to the dispensing platform it may be advantageous that a dispensing platform is held or biased to be sloped downwards from the rear edge to the front edge when held adjacent to a front edge of a shelf. The dispensing platform may be fixed in a sloped downwards position or may be adjustable such that it is in a sloped downwards position when positioned when adjacent a front edge of a shelf and may be moved to a different position when positioned away from the front edge of the shelf. For example, a dispensing platform may be able to be moved between a sloped downwards position when positioned adjacent a front edge of a shelf to a substantially horizontal position when away from the front edge of the shelf.

The or each dispensing platform is formed to be movable vertically through the openable closure of the food compartment. The openable closure may be positioned directly above or below the front edge of the or each shelf, or in any other suitable position, such that a food package moved off a shelf onto the dispensing platform may be moved vertically out of the food compartment on the dispensing platform through the openable closure. In such embodiments the vertical movement of the dispensing platform may act to open the openable closure or the openable closure may be controlled to open to allow the dispensing platform to move through the openable closure and subsequently closed again.

The openable closure may be formed in any manner apparent to the person skilled in the art. The openable closure operates to separate the food compartment from the heating area, minimising heat and air transfer between the two. This is particularly important if the food compartment is refrigerated and/or it is important to control the environmental conditions in which the food packages are stored. If the food compartment were in open contact with the heating area then it would be heated indirectly when the food packages are heated in the heating area, this is undesirable. It may advantageous that the openable closure is insulated to minimise heat transfer between the heating area and the food compartment. That is, the openable closure may be formed as an insulated thermal bulkhead for minimizing heat transfer between the food compartment and the heating compartment. It may also be advantageous that the openable closure is sealed when closed to prevent air moving between the food compartment and the heating area.

In embodiments of the invention the openable closure may comprise a hinged door provided either at an upper end or a lower end of the food compartment. A hinged door may be operable by one or more actuators or may be biased to be closed and may be operable by a separate component of the vending machine, for example the vertically movable dispensing platform described above. In embodiments of the invention the openable closure may be provided at a front side of the food compartment

As set out above, the heating area may be formed in any manner apparent to the person skilled in the art. In embodiments of the invention the heating compartment may include a lower heating plate and an upper heating plate between which the package may be positioned. A food package may be moved to be placed on the lower heating plate of the heating area for heating. An upper heating plate may either be fixed or may be movable towards the lower heating plate to compresss a food package placed therebetween. That is, the heating area may be formed in a manner substantially analogous to a sandwich press. If the upper heating plate is movable it may be operable by one or more actuators to move the upper heating plate towards the lower heating press. A lower heating plate may also be movable towards the upper heating plate and may be operable by one or more actuators.

The heating area will generally not be accessible to a user, in order to avoid a user coming into contact with any heating element located in the area, for example the heating plates discussed above. Instead, it may be preferable that a food package will be moved from the heating area to a dispensing area after heating. A dispensing area will have a dispensing openable closure thorough which a user may obtain a heated food package. A dispensing openable closure may be operable by actuators or may simply be biased to be closed and operable by a user. A dispensing openable closure may be a hinged door or any other suitable closure as may be apparent to the skilled person, for example from prior art vending machine. A dispensing area is advantageously separate from the food compartment and the heating area, it may be located between the food compartment and the heating area or may be located away from the food compartment, beyond the heating area, such that a food package will pass from the food compartment, to the heating area, and onto the dispensing area.

The heating area may be located in any suitable position relative to the food compartment and the openable closure of the food compartment in particular. In embodiments of the invention the heating area may be located horizontally adjacent to the food compartment. In such embodiments a horizontal mover may be provided for moving a package into the heating area after it has been moved out of the food compartment via the openable closure. Such a horizontal mover may be formed such that it only operates to move a food package along a single horizontal direction and does not operate in any other axis of movement. This may be advantageous as movement along a single axis is relatively simpler and easier to control and may result in the vending machine being more reliable and requiring less maintenance. A horizontal mover may be formed in any manner apparent to the person skilled in the art and may comprise, for example, a conveyor belt or a low friction surface combined with a pusher, or any other suitable mover.

In embodiments of the invention the horizontal mover comprises a pusher for moving a food package along a low friction surface. As set out above, a low friction surface may be formed in any manner apparent to a person skilled in the art and may comprise one or more rollers and/or a surface formed of a low friction material. A pusher may also be formed in any manner apparent to a person skilled in the art and may comprise one or more a pushing surfaces for pushing a food package in an appropriate horizontal direction. In such embodiments of the invention a food package may be positioned on the low friction surface by a vertically movable dispensing platform moving to a position immediately above the horizontal mover, wherein a pusher is operated to move the food package horizontally from the dispensing platform onto the low friction surface and thereafter along the low friction surface to the heating area. In such embodiments, the dispensing platform may be operable to be substantially flat when positioned above the low friction surface. This may require moving the dispensing platform from a downwardly sloped orientation, as described above, to a substantially flat position.

A pusher may extend completely across a width of a shelf and be moved by belts positioned at either lateral side of the shelf. The belts may extend a length of the shelf and be driven to move the pusher horizontally along the upper surface of the shelf. Moving the belt in a first direction will move the pusher towards a front edge of the shelf and moving the belt in the opposite direction will move the pusher towards a rear edge of the shelf.

A horizontal mover provided in the manner above, may further act to move a heated food package from the heating area to a dispensing area if the dispensing area is located horizontally from the heating area. If the dispensing area is located between the food compartment and the heating area the horizontal mover may be capable of moving a food package both forwards and backwards. If the dispensing area is located horizontally beyond the heating area, the pusher may only be required to operate to move a food package forwards any may be reset after the dispensing of any food package.

The heating of the food package in the heating area may be carried out in any particular manner and, in particular, may be controlled depending on the type of food being dispensed, the ambient temperature, and/or the preferences of a user.

In embodiments of the invention, a food package may be moved from the food compartment to the heating area and subsequently dispensed along a succession of one-dimensional operators, each operating to move the food package along a single axis of movement, preferably horizontal or vertical, such that no operator is moving the food package in two different axes of moment. This is advantageous as it provides a simpler and more reliable construction for a vending machine. For example, in the embodiment shown in the Figures and described below a food package is first moved horizontally by a first pusher, then vertically by a vertically movable dispensing platform, then horizontally be a second pusher, is then heated, and is finally moved horizontally to be dispensed by the second pusher. Each of the first pusher, the second pusher, and the dispensing platform only moving in one axis of movement.

The present invention may comprise a piercing means such as one or more blades, needles, or equivalent apparatus. The piercing means may be positioned and operable to pierce a food package before it is heated. This may be advantageous as it can ensure that packaging does not burst when a food package is heated. Piercing the packaging can also ensure that the food packages can be evenly heated as it can ensure that heating plates or other similar heating means can contact food within a package without there being an air cushion between the food and the heating means.

Further features and advantages of the present invention will be apparent from the embodiment shown in the Figures. Unless otherwise indicated by context or in the claims any feature of the embodiment shown in the Figures may be included in another embodiment of the invention independently from any other feature.

### Drawings

Figure 1 is a perspective view of a vending machine according to an embodiment of the present invention;
Figure 2 is a perspective view of the vending machine of Figure 1 with external panelling removed;

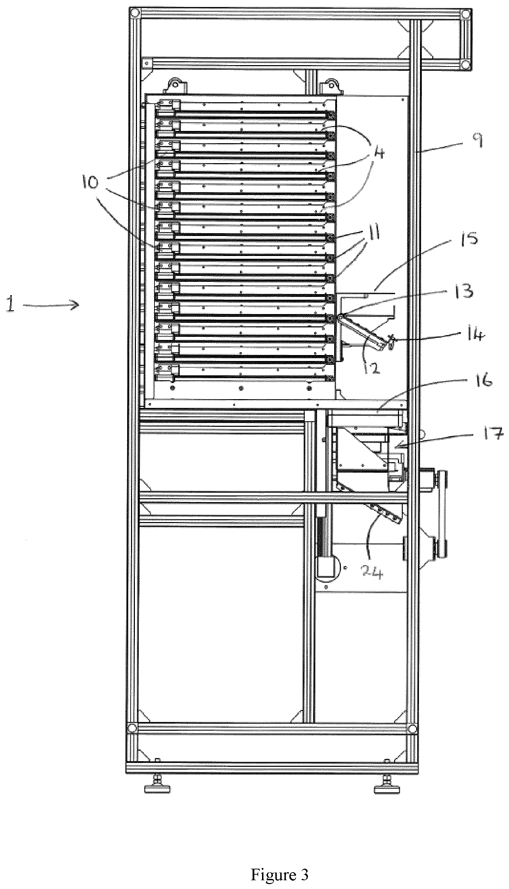

Figure 3 is a side view of Figure 2; and

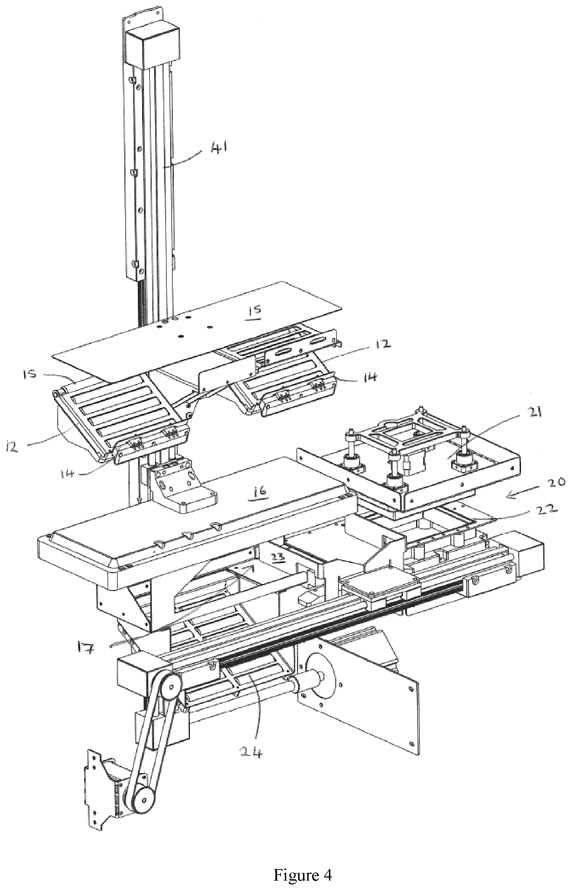

Figure 4 is a view of select parts of the vending machine shown in the previous Figures;

A vending machine 1 according to the present invention and details thereof are shown in the Figures. The vending machine 1 according to the invention has a food compartment 2 in which food packages 4 are stored on shelves 5. The food compartment 2 has a digital screen 6 positioned at a front side of the vending machine 1. A dispensing hatch 7 is positioned at a lower portion of the vending machine 1, immediately below the digital screen 6. The vending machine 1 is generally enclosed with panelling 8 such that the interior of the machine is not visible to a user. The vending machine 1 will be connected to a standard power supply by a cable and plug (not shown).

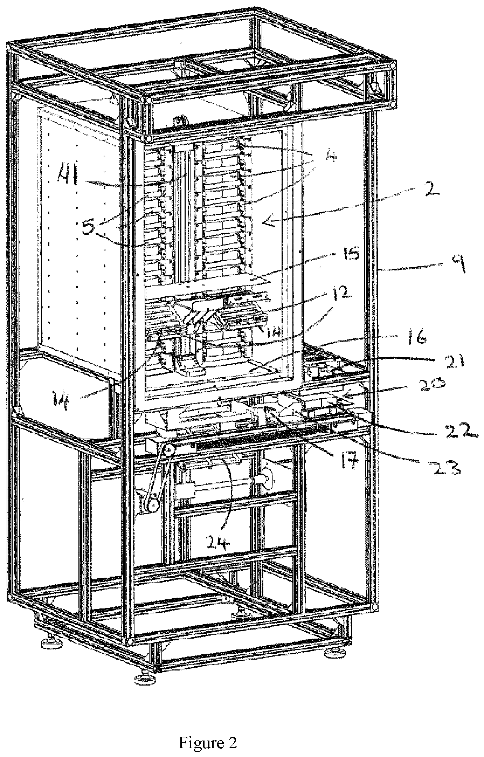

Details of the interior of the vending machine 1 are shown in Figure 2. Generally, the vending machine is formed of a metal frame 9 that contains the functional components of the vending machine 1. The food compartment 2 is a closed refrigerated compartment that acts to keep food packages 4 stored with the food compartment at a refrigerated temperature such that they can be stored for prolonged period of times. A front side of the food compartment 2 may be opened to allow an operator to stock the shelves 5 with food packages 4. The vending machine 1 is locked so that the food compartment 2 can only be accessed by an operator with a key. When in use the vending machine 1 is locked and the food compartment 2 cannot be accessed by a user.

Each shelf 4 has a horizontally movable pusher 10 that can be moved along an upper surface of a shelf from a rear end to a front end. An upper surface of each shelf 4 is formed of a low friction material that facilitates the sliding of food packages 5 along the shelf towards the front edge. A roller 11 is positioned at a front end of each shelf 4 to facilitate the pusher 10 acting to push a food package 5 off the front end of the shelf. As will be understood, if two or more food packages 5 are positioned on a shelf the pusher 10 will push a rearmost of the food packages 5, which will in turn push an adjacent food package. It is not essential for a pusher 10 to directly push a food package 5, a pusher 10 can indirectly push a food package 5 off the front end of a shelf 4 indirectly through intermediate food packages 5. In the embodiment shown in the Figures each shelf 4 may have three or four food packages positioned thereon. Two parallel columns of shelves 4 are provided, each comprising fourteen shelves. The two columns of shelves 4 are separated by a central divider 41.

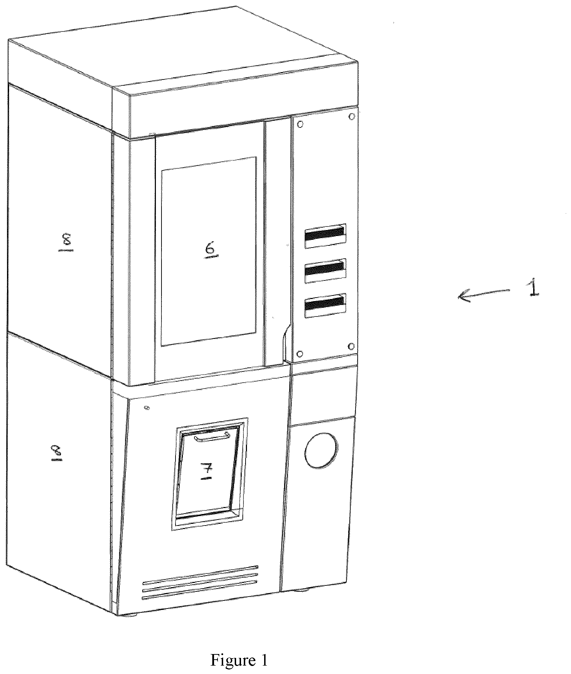

Two vertically movable dispensing platforms 12 are positioned within the food compartment 2 between the front edges of the shelves 4 and a front side of the food compartment. The dispensing platforms 12 are mounted to the central divider 41 of the food compartment 2 and are controllable to be vertically moved from an uppermost position at upper side of the food compartment to a lowermost position where it is moved out of a lower side of the food compartment. The dispensing platforms 12 are shown partway between these positions in the Figures 1. The dispensing platforms 12 each have a roller 13 positioned at a rear edge to facilitate a food package being pushed from a shelf 4 onto the dispensing platform. The dispensing platforms 12 are biased to be angled downwards from the rear edge to a front edge. An upper surface of each dispensing platform 12 is formed of a plurality of rollers to be low friction so that food packages 5 can slide along the upper surface easily. A barrier 14 is provided at a front edge of each dispensing platform 12 to retain food packages 5 on the platform. An upper barrier plate 15 is provided immediately above the dispensing platforms 12 and is moved vertically with the dispensing platforms. The barrier plate 15 extends substantially completely across a width of the food compartment 2 and from a front edge of the shelves 4 to a front side of the food compartment. The dispensing platforms 12 are mounted to be rotatable from the angled downwards orientation shown in the Figure to a substantially flat orientation. The dispensing platforms 12 are only movable in a vertical direction, they cannot be moved horizontally.

An openable closure 16 is formed at a lower side of the food compartment 2 in front of and immediately below the lowermost shelves 4. The openable closure 16 is a vertical movable door that is usually positioned to seal the food compartment 2. Immediately below the openable closure is a moving chamber 17 that extends laterally to a heating compartment 20 positioned adjacent the food compartment 2. The heating compartment 20 comprise an upper heating plate 21 and a lower heating plate 22. The upper heating plate 21 is vertically movable. The lower heating plate 22 is fixed in position. A horizontally movable moving carriage 23 is provided between in the moving chamber 17. The moving carriage 23 is movable from the heating compartment 20 to a position below the opposing lateral side of the food compartment 2. A piercing blade (not shown) is provided in the heating compartment 20 and is operable to pierce the packaging of a food package 5 positioned within the heating compartment. The moving carriage 23 consists of a frame that is slightly larger than a dispensing platform and can extend completely around sides of a dispensing platform and a food package 5 located thereon. A lower surface of the moving chamber 17 is a flat horizontal surface along which food packages 5 can be slid.

A dispensing slope 24 is provided immediately below the food compartment. The dispensing slope 24 is formed from a plurality of rollers such that a food package positioned on the dispensing slope 24 will slide downwards from towards its front edge. The dispensing slope 24 is angled downwards from a rear edge to a front edge. The front edge of the dispensing slope is positioned adjacent above a dispensing chamber formed on an inner side of the dispensing hatch 7. The dispensing slope 24 is passive and is not powered or operated in any way.

The vending machine 1 of the present invention is formed and intended for use with toastable sandwiches provided in heatable packaging. Each sandwich and its packaging will be a food package 5 according to the description above. Generally, the sandwiches will be substantially cuboid. Three or four of the food packages 5 will be positioned on each shelf 4. It is to be understood that the food packages on each shelf 4 will generally be identical. Different food packages 5 may be positioned on different shelves 4.

The vending machine 1 of the Figures is operated in the following manner.

A user will approach the vending machine 1, make a selection of their preferred sandwich from the digital screen, and make payment using either cash, a card, contactless payment, or any other suitable payment means. After payment has been made the vending machine 1 will be controlled to select, heat and dispense the appropriate food package 5.

First, the appropriate dispensing platform 12 is moved vertically to positioned adjacent a front edge of the shelf 4 on which the appropriate food package 5 is positioned, such that the rear edge of the dispensing platform 12 is positioned immediately adjacent a front edge of the shelf 4. Then the horizontally movable pusher 10 of the shelf 4 is operated to move forward to push a single food package 5 off the front edge of the shelf 4 onto the dispensing platform 12.

The dispensing platform 12 is then moved vertically downwards through the openable closure 16 and into the moving chamber 17. **In** this position the openable closure 16 will be moved downwards but the upper plate 15 will reseal the food compartment 2 and ensure that the remaining food packages within the food compartment 2 remain refrigerated. When the dispensing platform 12 reaches the moving chamber 17 it will contact an impingement surface of the moving chamber 17 which will act on the dispensing platform 12 to move it into a horizontal orientation, flat against the lower surface of the moving chamber. The moving carriage 23 will be positioned to extend around the appropriate dispensing platform 12 before the dispensing platform is lowered.

The moving carriage 23 is then operated to move horizontally to move the food package 5 horizontally along the dispensing platforms 12 and along to the heating compartment 20, such that it is on an upper surface of the lower heating plate 22 and below the upper heating plate 21. The food package 5 is then pierced. The dispensing platform 12 is then moved vertically upwards back into the food compartment 2 and the openable closure 16 is closed to close the food compartment.

When the food package 5 is positioned between the lower and upper heating plates 21, 22 the upper heating plate 21 is moved downwards to sandwich the food package 5 between the heating plates. The heating plates 21, 22 are then controlled to heat the food package at a suitable temperature profile for a suitable length of time. After heating the food package 5 the upper heating plate 21 is moved upwards away from the food package 5.

The moving carriage 23 is then moved horizontally to move the food package 5 along the lower surface of the moving chamber until it is slid onto the dispensing slope 24. The food package 5 then slides down the dispensing slope 24 into the dispensing chamber. The user then opens the dispensing hatch 7 and can remove the heated food package 5 from the vending machine 1.

As can be seen from the Figures, the moving carriage 23, the dispensing platforms 12 and the pushers are all belt driven and are movable along a single axis of movement. This provides reliable and accurate movement that is easily controllable. The movement of the heating plates 21, 22 can be operated by a gear (not shown).

The vending machine 1 is advantageous in that it can dispense food packages 5 in a reliable manner using components that each move only along a single axis, either vertically or horizontally. Further, the food packages 5 are reliably and repeatedly moved from a refrigerated compartment to a heater and then dispensed without significant heating of the refrigerated compartment.

## Claims

1. A hot food vending machine (1) comprising:
a food compartment (2) for containing packages (5) of a heatable food, the food compartment (2) having one or more storage locations in which a package (5) can be located and an openable closure (16) that seals the food compartment (2) when in a closed position;
a non-microwave heating area (20) for heating the packages (5) separate from the food compartment (2); and
moving apparatus for moving a package (5) from the food compartment (2) to the heating area (20) through the openable closure (16); wherein:
one or more shelves (4) are located in the food compartment (2) on which the packages (5) can be positioned, each shelf (4) extending from a rear end to a front edge;
a vertical movable dispensing platform (12) is provided forward of the front edge of the or
each shelf (4) within the food compartment (2), the dispensing platform (12) being vertically movable to be positioned adjacent a front edge of a shelf (4) and sized to hold a food package (5) and having a rear edge for positioning adjacent a front edge of a shelf and
a front edge opposing the rear edge; and
the dispensing platform (12) can be moved vertically through the openable closure (16) of the food compartment (2).

2. A vending machine (1) according to claim 1, wherein the one or more shelves (4) are formed with a low friction upper surface such that packages (5) can be pushed along the or each shelf (4).

3. A vending machine (1) according to claim 2, wherein the upper surface of the one or more shelves (4) comprises rollers.

4. A vending machine (1) according to any previous claim, wherein a pusher (10) is provided for each of the one or more shelves (4) arranged to be able to be controlled to push a package located on a shelf towards the front edge.

5. A vending machine (1) according to claim 4, wherein the or each pusher (10) comprises a horizontally movable actuator that can be moved along a shelf (4) between the rear end and the front edge.

6. A vending machine (1) according to any preceding claim, wherein the dispensing platform (12) has a barrier (14) is provided at the front edge to prevent packages (5) falling off said front edge.

7. A vending machine (1) according to any preceding claim, wherein a roller (13) is provided at the rear edge of the dispensing platform (12).

8. A vending machine (1) according to any preceding claim, wherein the dispensing platform (12) is held or biased to be sloped downwards from the rear edge to the front edge.

9. A vending machine (1) according to claim 11, wherein the dispensing platform (12) is rotatably mounted and is moved to be substantially horizontal when moved completely through the openable closure (16).

10. A vending machine (1) according to any preceding claim, wherein the openable closure (16) comprises a hinged door provided either at an upper end or a lower end of the food compartment (2).

11. A vending machine (1) according to any preceding claim, wherein the openable closure (16) is formed as an insulated thermal bulkhead for minimizing heat transfer between the food compartment (2) and the heating compartment (20).

12. A vending machine (1) according to any preceding claim wherein the heating area (20) includes a lower heating plate (22) and an upper heating plate (21) between which the package (5) may be positioned.

13. A vending machine (1) according to claim 12, wherein the upper heating plate (21) can be moved towards the lower heating plate (22) to compress a package (5) placed therebetween.

14. A vending machine (1) according to any preceding claim, wherein the heating area (20) is located horizontally adjacent to the food compartment (2) and a horizontal mover (23) is provided for moving a package (5) into the heating compartment (20) after it has been moved out of the food compartment (2) via the openable closure (16).

15. A vending machine (1) according to any preceding claim, further comprising an openable outlet (7) from which a heated package may be removed from the machine.
